# EUROPEAN PATENT APPLICATION

(11) **EP 4 664 650 A1**
(43) Date of publication of application: **17.12.2025**
(21) Application number: 24305933.4
(22) Date of filing: 14.06.2024
(51) Int. Cl.: H01M 50/403, H01M 50/417, H01M 50/46, H01M 50/463

(54) **ELECTROCHEMICAL CELL COMPRISING A SEPARATOR ATTACHED TO AN ELECTRODE**

(71) Applicant: Saft Groupe, 92300 Levallois-Perret (FR)
(72) Inventor: JOSEFSSON, Simon, 414 57 GÖTEBORG (SE); DAHLBERG, Ronnie, 572 62 OSKARSHAMN (SE); KUMM, Henrik, 572 31 OSKARSHAMN (SE); MÅRLID, Björn, 572 40 OSKARSHAMN (SE)
(74) Representative: Lavoix

(57) **Abstract**

The electrochemical cell (10) comprises at least an electrochemical set (12) comprising:
- a first electrode (14) having a first polarity and a second electrode (16) having a second polarity opposed to the first polarity;
- a separator (17) interposed between the first electrode (14) and the second electrode (16) and comprising at least a bar (40) made up of a separator material;

The at least one bar (40) is attached to the first electrode (14) and/or to the second electrode (16).

## Description

The present invention concerns an electrochemical cell comprising at least an electrochemical set comprising:
- a first electrode having a first polarity and a second electrode having a second polarity opposed to the first polarity;
- a separator interposed between the first electrode and the second electrode and comprising at least a bar made up of a separator material.

Batteries are essential for energy storage in many applications and systems. The integrity of a battery is an important condition to provide viable storage and delivery of electrical power.

Batteries generally comprise a plurality of electrochemical cells which comprise stacks of electrodes, also called plates, of opposed polarities separated with a separator. Low voltage cells and sometimes short circuits may however occur in a battery when the electrical separation between two electrodes of opposite polarities is defective.

Electrical separation can be provided by different technical solutions. One solution is to provide an open grid separator having rigid vertical bars. Using a grid has the advantage of maintaining a predefined gap between the electrodes. However, connecting the bars together require horizontal or inclined bars which collect sediments present in the electrolyte. Build-up of sediments on the bars between the electrodes may cause lower voltage cells and in critical cases, short circuits.

Another solution is to provide a felt as a separator between the electrodes. The felt is for example made of a non-woven. The felt prevents the passage of sediments and thus, the build-up of sediment bridges between the electrodes.

Nevertheless, when pressing the stack of electrodes and separators, the felt may be pressed too tightly, resulting in an undefined gap between the electrodes. The density of felt can thus vary among the separators in the battery. This can be an issue concerning the stability of the stack and regarding electrolyte penetration in the stack.

An intermediate solution is described in WO2020/037183. The document discloses a separator comprising a porous membrane having arrays of ribs which are integrally formed for example by moulding.

Manufacturing such assemblies with tight tolerances is tedious and expensive. Moreover, the material of the membrane must in some instances be quite flexible and elastic, which is contradictory with the stiffness required for defining a distance between the electrodes. This may lead to instances in which fixed distances between the electrodes and the separator cannot be maintained in use.

EP 4 362 198 discloses a separator comprising a porous flat separating element made of a porous membrane or of a felt and at least a rib stiffening the flat separating element and fixed to the flat separating element. This separator is not entirely satisfactory. In fact, the porous flat separating element limits the exchanges of ions between the electrolyte and the electrodes. Moreover, in EP 4 362 198, first, the separator is manufactured and subsequently the manufactured separator is interposed between successive electrodes of opposed polarities to form a bundle. This manufacturing method is not entirely satisfactory as it is tedious and time consuming. Thus, there is a need to optimize the manufacturing method while ensuring that the separator maintain reliably a predetermined distance between the electrodes.

One aim of the invention is to provide an easy to manufacture electrochemical cell, which allows a battery to reliably deliver high power, while limiting the risk of insufficient voltage or short circuits.

To this aim, the subject matter of the invention is an electrochemical cell of the aforementioned type, wherein the at least one bar is attached to the first electrode and/or to the second electrode.

Thanks to these features, the reliability of the battery is improved since the separator is directly attached to the electrodes. This makes the electrochemical cell more robust. Additionally, with such an electrochemical cell, errors in the positioning of the separator during assembling can be prevented. Also, the design of the separator is easily adaptable.

The electrochemical cell according to the invention may comprise one or more of the following feature(s), taken solely or according to any technical feasible combination:
- the separator consists of the at least one bar;
- the at least one bar is attached to the first electrode and/or to the second electrode by adhesion of the separator material to the first electrode and/or to the second electrode;
- the separator material has a viscosity at 190°C between 2000 mPa.s and 3500 mPa·s;
- the separator material has an electrical conductivity equal to or smaller than 10⁻⁷ S/cm;
- the separator material has a melting point equal to or higher than 70°C;
- the separator material is resistant to alkaline electrolytes;
- the separator material is:
   - a plastic, in particular a polyolefin; or
   - hot melt glue;
- the at least one bar has a thickness which is between 1.1 mm and 1.3 mm, preferentially substantially equal to 1.2 mm;
- the at least one bar has a width which is between 1.0 mm and 2.0 mm, preferentially substantially equal to 1.5 mm;
- the at least one bar is attached to the first electrode and/or to the second electrode by extruding, gluing and/or 3D printing;
- the separator comprises several parallel bars, the distance between two adjacent bars being between 25 mm and 40 mm;
- the first electrode and/or the second electrode extend according to a longitudinal axis between first and second longitudinal edges and according to a transversal axis between first and second transversal edges, the electrochemical set further comprising first and second extruded cover profiles with a U shaped cross-section, respectively attached to the first electrode or the second electrode and covering respectively the first transversal edge and the second transversal edge of the first electrode or the second electrode,
   at least one bar of the several parallel bars being fixed to the first extruded covering profile and at least one bar of the several parallel bars being fixed to the second extruded covering profile;
- the first electrode and/or the second electrode comprise assembled pockets;
- the electrochemical cell further comprises an alkaline electrolyte in which the at least one electrochemical set is at least partially immersed.

The invention also concerns a method for manufacturing the electrochemical cell as described above, comprising manufacturing the at least one electrochemical set, the manufacturing of the at least one electrochemical set comprising:
- providing the first electrode and the second electrode;
- attaching the at least one bar to the first electrode and/or to the second electrode so that the separator is interposed between the first electrode and the second electrode.

Optionally, the step of attaching the at least one bar to the first electrode and/or to the second electrode comprises extruding, gluing and/or 3D printing the separator material onto the first electrode and/or to the second electrode to form the at least one bar, the at least one bar being attached to the first electrode and/or to the second electrode by adhesion of the separator material to the first electrode and/or to the second electrode.

The invention will be better understood, upon reading of the following description, given only as an example, and made in reference to the following figures in which:
- [Fig. 1] figure 1 is a perspective view of an electrochemical cell according to the invention;
- [Fig. 2] figure 2 is a perspective view of an assembly comprising an electrode and separators attached to said electrode;
- [Fig. 3] figure 3 is a top view of the assembly of figure 2;
- [Fig. 4] figure 4 is a side view of the assembly of figure 2;
- [Fig. 5] figure 5 is a flowchart illustrating the method for manufacturing the electrochemical cell of figure 1.

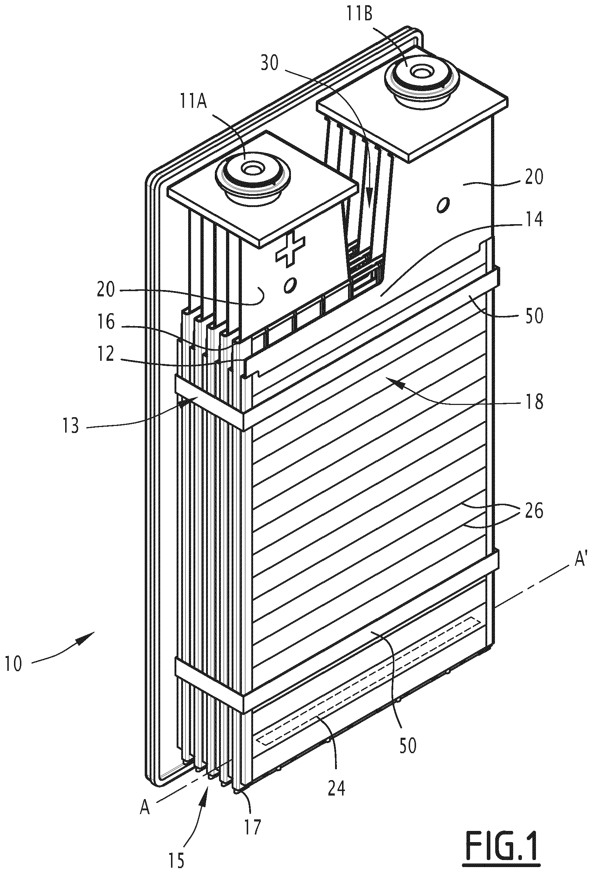

An electrochemical cell 10 is illustrated on figure 1.

A plurality of electrochemical cells 10 are assembled to form a battery. The battery containing the cells 10 is for example arranged in a vehicle, such as a train, a boat, a car or in a facility, such as an oil rig, a hospital, a train station.

The electrochemical cell 10 is for example intended to be connected via terminals 11A, 11B to at least an electrical component to power said electrical component, or to a source of electrical power to charge the electrochemical cell 10.

The electrochemical cell 10 comprises at least one electrochemical set 12, in particular a plurality of electrochemical sets 12, which are stacked together. Optionally, the electrochemical cell 10 further comprises at least a holder 13 to maintain the electrochemical sets 12 stacked together in a stack 15.

Each electrochemical set 12 comprises a first electrode 14 having a first polarity, a second electrode 16 having a second polarity opposed to the first polarity and a separator 17 interposed between the first electrode 14 and the second electrode 16 in particular to separate the first electrode 14 and the second electrode 16.

Advantageously, the electrochemical set 12 further comprises first and second extruded cover profiles 60, 62.

For example, the first electrode 14 and the second electrode 16 are of the pocket type. In particular, the first electrode 14 and the second electrodes 16 comprise assembled pockets. In a variant, the first electrode 14 and the second electrode 16 are of the sintered type or of the non-sintered type.

As shown in the example of figure 1, the electrodes 14, 16 of opposite polarities are facing each other. The stack 15 of electrochemical sets 12 includes successive positive polarity electrodes 16 facing negative polarity electrodes 14.

For example, the first electrode 14 and/or the second electrode 16 extend according to a longitudinal axis X between first and second longitudinal edges 14A, 14B, 16A, 16B and according to a transversal axis Y between first and second transversal edges 14C, 14D, 16C, 16D. Usually, the electrochemical cell 10 is arranged so that the gravity applies according to the longitudinal axis X. In other terms, the electrochemical cell 10 is arranged so that the longitudinal axis X is parallel to an elevation direction.

Advantageously, each of the first electrode 14 and the second electrode 16 present two opposite main faces 19 extending substantially parallel to the longitudinal and transversal axes X, Y.

As shown in the example of figure 1, each electrode 14, 16 contains an electrode base 18 comprising an active material and an electrical connection lug 20 protruding from the electrode base 18. In particular, if the electrodes 14, 16 are of the pocket type, the active material is kept within a pocket comprising two perforated nickel plated steel strips folded together and acting as current collectors.

For instance, the electrical connection lugs 20 of the positive polarity electrodes 16 protrude facing each other in a first region of the stack 15 of electrochemical sets 12 (here on the left in figure 1) to be connected to a first terminal 11A, in particular via a positive contact plate. The electrical connection lugs 20 of the negative polarity electrodes 14 protrude facing each other in a second region of the stack 15 of electrochemical sets 12, distinct from the first region (here at the right in figure 1) to be connected to a second terminal 11B, in particular via a negative contact plate.

Advantageously, the cell 10 further comprises an electrolyte in which the at least one electrochemical set, in particular the electrodes 14, 16 and the separator 17 are at least partially immersed. The electrolyte allows the ionic conduction and electrochemical reactions at the electrodes 14, 16 within the cell 10.

The electrolyte is for example an aqueous solution, preferably an alkaline solution comprising at least one hydroxide (for example KOH, NaOH, LiOH).

Both electrodes 14, 16 comprise active material 24. The active material 24 of the negative polarity electrode 14 for example comprises cadmium. The active material of the positive polarity electrode 16 for example comprises nickel. More generally, the cell 10 is configured for having an aqueous electrolyte and can be a Nickel-Cadmium, Nickel metal Hydride, Nickel-Zinc, Nickel-Iron, Lead acid and Zinc-ion type. Preferentially, the cell 10 is configured for having an alkaline electrolyte. For example, the cell is a Nickel-Cadmium cell and is configured for having an alkaline electrolyte, preferentially an alkaline electrolyte comprising potassium hydroxide (KOH).

In the particular example of figure 1, each electrode 14, 16 comprises an assembly of several adjacent pockets 26 joined together to form an electrode base 18.

Each pocket 26 comprises two assembled C-shaped profiles having through apertures and a briquette of active material 24 positioned between the two profiles.

Both profiles are advantageously made of metal, for example steel.

The pockets 26 extend parallel to a common axis A-A', which can be vertical or horizontal.

The pockets 26 are arranged adjacent to each other. Adjacent pockets 26 are connected to one another along opposed side edges of the pockets 26, parallel to the common axis A-A', for example by a side flank.

The electrical connection lug 20 protrudes from an end pocket 26 of the electrode base 18.

The adjacent pockets 26 and the lug 20 thus form an electrode 14, 16 which is movable in one piece to be placed in the stack 15.

Advantageously, the active material of each electrode is totally immersed in the electrolyte.

The separator 17 maintains a predetermined distance between the electrodes 14, 16 while avoiding the formation of bridges of solid particles between the electrodes 14, 16. This makes it possible to prevent low voltages and short circuits.

Advantageously, the separator 17 is an electric insulator.

Advantageously again, the separator 17 is adapted to prevent electric contact between the electrode 14, 16 and is adapted to allow the passage of ions of the electrolyte through itself.

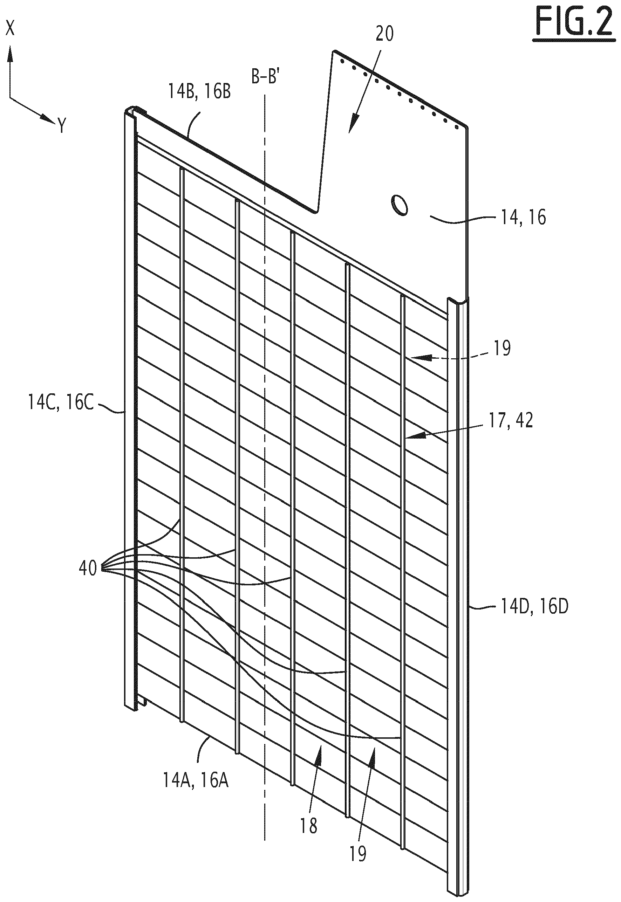

As shown on figures 2 to 4, the separator 17 comprises at least a bar 40 made up of a separator material. In particular, the separator 17 consists of the at least one bar 40.

Advantageously, the separator 17 comprises several parallel bars 40, which in particular form a grid 42. Notably, the separator 17 consists of the several parallel bars 40.

Advantageously, the separator material has a viscosity at 190°C between 2000 mPa s and 3500 mPa·s.

Advantageously, the separator material has an electrical conductivity equal to or smaller than 10⁻⁷ S/cm.

Advantageously, the separator material has a melting point equal to or higher than 70°C.

Advantageously, the separator material is resistant to alkaline electrolytes. In particular, the separator material is resistant to electrolytes comprising KOH with a concentration lower than or equal to 50%. To test if the separator material is resistant to alkaline electrolytes, for example, a sample of separator material is immersed into an alkaline solution (for example a solution with a concentration of KOH substantially equal to 1.30 g/cm³) for 1,000 hours at 70°C. If the weight change of the sample of separator material is lower than or equal to 1%, the separator material is deemed to be resistant to alkaline electrolytes.

Advantageously, the separator material is:
- a plastic, in particular a polyolefin, such as polypropylene, acrylonitrile butadiene styrene or polyethylene; or
- hot melt glue.

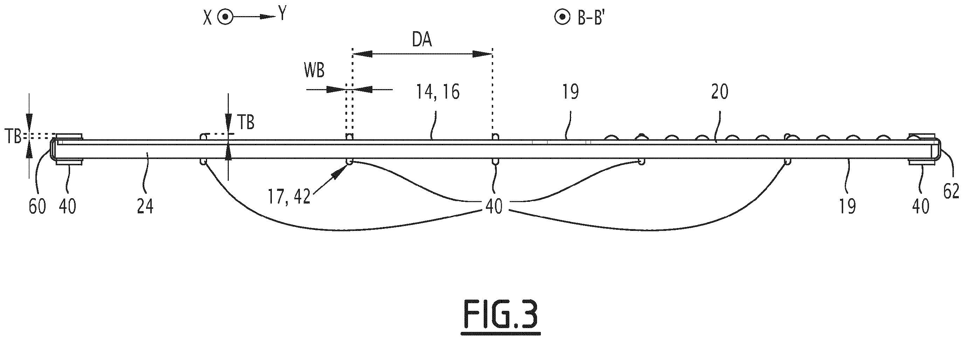

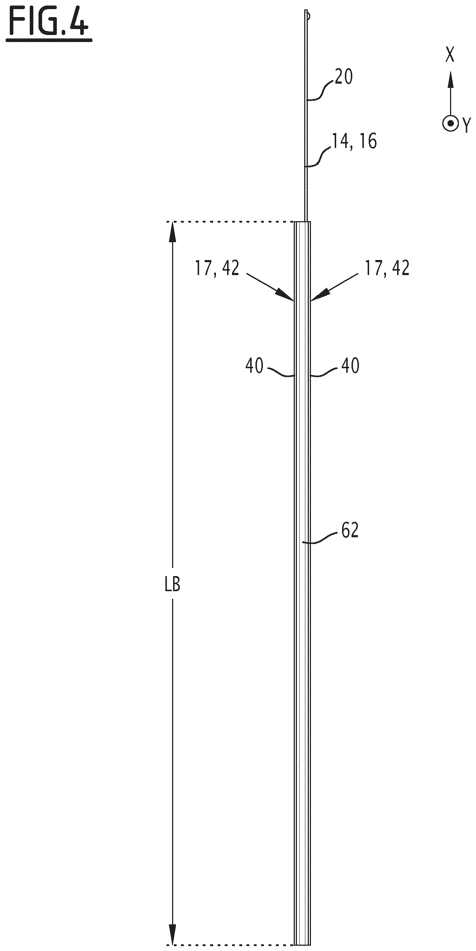

As shown on figures 2 to 4, the at least one bar 40 is attached to the first electrode 14 and/or to the second electrode 16, in particular onto at least one of the main faces 19. On the particular example of figures 3 and 4, at least one bar 40 is attached on one main face 19 and at least one bar 40 is attached on the opposite main face 19 of the corresponding electrode 14, 16.

Advantageously, the at least one bar 40 is attached to the first electrode 14 and/or to the second electrode 16 by adhesion of the separator material to the first electrode 14 and/or to the second electrode 16.

In the embodiment wherein the first electrode 14 and the second electrode 16 are of the pocket type, the at least one bar 40 is attached to the pockets, the nickel plated steel strips acting as current collectors.

In particular, the at least one bar 40 is attached to the first electrode 14 and/or to the second electrode 16 by extruding, gluing and/or 3D printing.

The at least one bar 40 defines a space between the electrode 14, 16 onto which it is attached and the next electrode 14, 16.

In the example of figures 1 to 4, the bars 40 extend parallel to an axis B-B', which is here parallel to the longitudinal axis X.

In this example, the bars 40 are disjoint and totally apart from each other. In particular, the separator 17 is devoid of any transverse structure connecting the bars 40. This makes it possible to minimize the risk of collection of sediments between the electrodes 14, 16.

For instance, the length LB of each bar 40, measured parallel to the axis B-B' is substantially equal to or greater than the length LE of the electrode base 18 of the electrode 14, 16 onto which it is attached.

For instance, the at least one bar has a width WB, measured perpendicularly to the axis B-B' and parallel to the plan of extension of the electrodes 14, 16 which is between 1.0 mm and 2.0 mm, preferentially substantially equal to 1.5 mm.

For instance, the at least one bar has a thickness TB, measured perpendicularly to the axis B-B' and perpendicularly to the plan of extension of the electrodes 14, 16 which is between 1.1 mm and 1.3 mm, preferentially substantially equal to 1.2 mm.

Advantageously, the distance DA between two adjacent bars 40, taken perpendicularly to the axis B-B', is between 25 mm and 40 mm.

For instance, the ratio on the main faces 19 of the surface area occupied by bars 40 to the total surface area of the main faces 19 is preferably smaller than 10%, in particular smaller than 6%, and is generally comprised between 1% and 5%.

Such a ratio optimizes the operation of the separator 17. The surface area occupied by the bars 40 is small enough to limit interfering with the passage of ions present in the electrolyte.

In reference to figure 1, the holder 13 comprises at least a belt 50 surrounding and pressing the electrodes 14, 16 and separators 17 within the stack 15 of electrochemical sets 12 at the periphery of the stack 15 of electrochemical sets 12.

In a variant, not shown, the holder 13 comprises end electrochemical sets connected by peripheral rods pressing the electrodes 14, 16 and separators 17.

In reference to figures 2 to 4, the first and second extruded cover profiles 60, 62 have a U shaped cross-section.

The first and second extruded cover profile 60, 62 are attached to the first electrode 14 or the second electrode 16 and cover respectively the first transversal edge 14C, 16C and the second transversal edge 14D, 16D of the first or second electrode 14, 16.

At least one bar 40 of the several parallel bars 40 are fixed to the first extruded covering profile 60 and at least one bar 40 of the several parallel bars 40 are fixed to the second extruded covering profile 62. This makes it possible to prevent the undesired peeling off of the bars 40 arranged at the transversal edges 14C, 14D, 16C, 16D.

As shown on the particular example of figure 3, the width of the at least one bar 40 attached to the first or second extruded covering profile 60, 62 is greater than the width of the at least one bar 40 directly attached to the main face 19 of the corresponding electrode 14, 16.

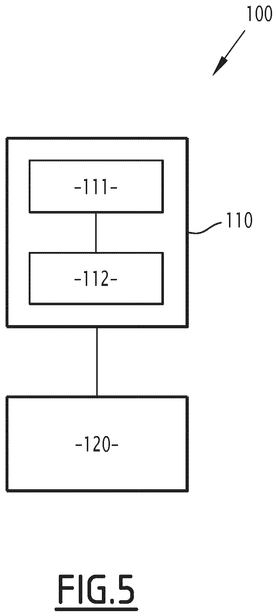

A method 100 of manufacturing the electrochemical cell 10 is described in view of figure 5.

The method 100 comprises manufacturing 110 the at least one electrochemical set 12.

The manufacturing 110 of the at least one electrochemical set 12 comprises providing 111 the first and second electrodes 14, 16 and attaching 112 the at least one bar 40 to the first electrode 14 and/or the second electrode 16 so that the separator 17 is interposed between the first electrode 14 and the second electrode 16.

Advantageously, the step 112 of attaching the at least one bar to the first electrode 14 and/or to the second electrode 16 comprises extruding, gluing and/or 3D printing the separator material onto the first electrode 14 and/or to the second electrode 16 to form the at least one bar 40. Thanks to the properties of the separator material, the at least one bar 40 binds to the first electrode 14 and/or to the second electrode by adhesion of the separator material to the first electrode 14 and/or to the second electrode 16.

Advantageously again, during step 112, several electrodes 14, 16 are conveyed on a conveyor and a fabricator system, such as an extruder and/or a 3D printer, successively deposit the separator material onto said electrodes 14, 16 as they are moved onto a conveyor belt of the conveyor. This makes it possible to manufacture rapidly and efficiently a high number of electrochemical sets 12.

For example, the method 100 further comprises assembling 120 the at least one electrochemical set 12 together to form the electrochemical cell 10.

Thanks to the invention, the electrochemical cell 10 is easy to manufacture and the cell 10 allows the battery to reliably deliver high power with a reduced risk of insufficient voltage or short circuit. The separator 17 being directly attached to the electrodes 14, 16, the electrochemical cell 10 is more robust. Furthermore, the manufacturing method 100 is simplified and made more rapid.

## Claims

1. An electrochemical cell (10) comprising at least an electrochemical set (12) comprising:
- a first electrode (14) having a first polarity and a second electrode (16) having a second polarity opposed to the first polarity;
- a separator (17) interposed between the first electrode (14) and the second electrode (16) and comprising at least a bar (40) made up of a separator material; **characterized in that** the at least one bar (40) is attached to the first electrode (14) and/or to the second electrode (16).

2. The electrochemical cell (10) according to claim 1, wherein the separator (17) consists of the at least one bar (40).

3. The electrochemical cell (10) according to claim 1 or 2, wherein the at least one bar (40) is attached to the first electrode (14) and/or to the second electrode (16) by adhesion of the separator material to the first electrode (14) and/or to the second electrode (16).

4. The electrochemical cell (10) according to any one of the preceding claims, wherein the separator material has a viscosity at 190°C between 2000 mPa s and 3500 mPa s.

5. The electrochemical cell (10) according to any one of the preceding claims, wherein the separator material has an electrical conductivity equal to or smaller than 10⁻⁷ S/cm.

6. The electrochemical cell (10) according to any one of the preceding claims, wherein the separator material has a melting point equal to or higher than 70°C.

7. The electrochemical cell (10) according to any one of the preceding claims, wherein the separator material is resistant to alkaline electrolytes.

8. The electrochemical cell (10) according to any one of the preceding claims, wherein the separator material is:
- a plastic, in particular a polyolefin; or
- hot melt glue.

9. The electrochemical cell (10) according to any one of the preceding claims, wherein the at least one bar (40) has a thickness (TB) which is between 1.1 mm and 1.3 mm, preferentially substantially equal to 1.2 mm.

10. The electrochemical cell (10) according to any one of the preceding claims, wherein the at least one bar (40) has a width (WB) which is between 1.0 mm and 2.0 mm, preferentially substantially equal to 1.5 mm.

11. The electrochemical cell (10) according to any one of the preceding claims, wherein the at least one bar (40) is attached to the first electrode (14) and/or to the second electrode (16) by extruding, gluing and/or 3D printing.

12. The electrochemical cell (10) according to any one of the preceding claims, wherein the separator (17) comprises several parallel bars (40), the distance (DA) between two adjacent bars (40) being between 25 mm and 40 mm.

13. The electrochemical cell (10) according to claim 12, wherein the first electrode (14) and/or the second electrode (16) extend according to a longitudinal axis (X) between first (14A, 16A) and second (14B, 16B) longitudinal edges and according to a transversal axis (Y) between first (14C, 16C) and second (14D, 16D) transversal edges,
the electrochemical set (12) further comprising first and second extruded cover profiles (60, 62) with a U shaped cross-section, respectively attached to the first electrode (14) or the second electrode (16) and covering respectively the first transversal edge (14C, 16C) and the second transversal edge (14D, 16D) of the first electrode (14) or the second electrode (16),
at least one bar (40) of the several parallel bars (40) being fixed to the first extruded covering profile (60) and at least one bar (40) of the several parallel bars (40) being fixed to the second extruded covering profile (62).

14. The electrochemical cell (10) according to any one of the preceding claims, wherein the first electrode (14) and/or the second electrode (16) comprise assembled pockets.

15. The electrochemical cell (10) according to any one of the preceding claims, wherein the electrochemical cell (10) further comprises an alkaline electrolyte in which the at least one electrochemical set (12) is at least partially immersed.

16. A method (100) for manufacturing the electrochemical cell (10) according to any one of the preceding claims, comprising manufacturing (110) the at least one electrochemical set (12), the manufacturing (110) of the at least one electrochemical set (12) comprising:
- providing (111) the first electrode (14) and the second electrode (16);
- attaching (112) the at least one bar (40) to the first electrode (14) and/or to the second electrode (16) so that the separator (17) is interposed between the first electrode (14) and the second electrode (16).

17. The method (100) according to claim 16, wherein the step (112) of attaching the at least one bar (40) to the first electrode (14) and/or to the second electrode (16) comprises extruding, gluing and/or 3D printing the separator material onto the first electrode (14) and/or to the second electrode (16) to form the at least one bar (40), the at least one bar (40) being attached to the first electrode (14) and/or to the second electrode (16) by adhesion of the separator material to the first electrode (14) and/or to the second electrode (16).

## Amended claims

### Amended claims in accordance with Rule 137(2) EPC.

1. An electrochemical cell (10) comprising at least an electrochemical set (12) comprising:
- a first electrode (14) having a first polarity and a second electrode (16) having a second polarity opposed to the first polarity, wherein the first electrode (14) and/or the second electrode (16) extend according to a longitudinal axis (X) between first (14A, 16A) and second (14B, 16B) longitudinal edges and according to a transversal axis (Y) between first (14C, 16C) and second (14D, 16D) transversal edges;
- a separator (17) interposed between the first electrode (14) and the second electrode (16) and comprising several parallel bars (40) made up of a separator material;
the parallel bars (40) being attached to the first electrode (14) and/or to the second electrode (16),
**characterized in that** the separator material is hot melt glue,
wherein the distance (DA) between two adjacent bars (40) being between 25 mm and 40 mm,
the electrochemical set (12) further comprising first and second extruded cover profiles (60, 62) with a U shaped cross-section, respectively attached to the first electrode (14) or the second electrode (16) and covering respectively the first transversal edge (14C, 16C) and the second transversal edge (14D, 16D) of the first electrode (14) or the second electrode (16),
at least one bar (40) of the several parallel bars (40) being fixed to the first extruded covering profile (60) and at least one bar (40) of the several parallel bars (40) being fixed to the second extruded covering profile (62).

2. The electrochemical cell (10) according to claim 1, wherein the separator (17) consists of the parallel bars (40).

3. The electrochemical cell (10) according to claim 1 or 2, wherein the parallel bars (40) are attached to the first electrode (14) and/or to the second electrode (16) by adhesion of the separator material to the first electrode (14) and/or to the second electrode (16).

4. The electrochemical cell (10) according to any one of the preceding claims, wherein the separator material has a viscosity at 190°C between 2000 mPa·s and 3500 mPa·s.

5. The electrochemical cell (10) according to any one of the preceding claims, wherein the separator material has an electrical conductivity equal to or smaller than 10⁻⁷ S/cm.

6. The electrochemical cell (10) according to any one of the preceding claims, wherein the separator material has a melting point equal to or higher than 70°C.

7. The electrochemical cell (10) according to any one of the preceding claims, wherein the separator material is resistant to alkaline electrolytes.

8. The electrochemical cell (10) according to any one of the preceding claims, wherein the parallel bars (40) have a thickness (TB) which is between 1.1 mm and 1.3 mm, preferentially substantially equal to 1.2 mm.

9. The electrochemical cell (10) according to any one of the preceding claims, wherein the parallel bars (40) have a width (WB) which is between 1.0 mm and 2.0 mm, preferentially substantially equal to 1.5 mm.

10. The electrochemical cell (10) according to any one of the preceding claims, wherein the parallel bars (40) are attached to the first electrode (14) and/or to the second electrode (16) by extruding, gluing and/or 3D printing.

11. The electrochemical cell (10) according to any one of the preceding claims, wherein the first electrode (14) and/or the second electrode (16) comprise assembled pockets.

12. The electrochemical cell (10) according to any one of the preceding claims, wherein the electrochemical cell (10) further comprises an alkaline electrolyte in which the at least one electrochemical set (12) is at least partially immersed.

13. A method (100) for manufacturing the electrochemical cell (10) according to any one of the preceding claims, comprising manufacturing (110) the at least one electrochemical set (12), the manufacturing (110) of the at least one electrochemical set (12) comprising:
- providing (111) the first electrode (14) and the second electrode (16);
- attaching (112) the parallel bars (40) to the first electrode (14) and/or to the second electrode (16) so that the separator (17) is interposed between the first electrode (14) and the second electrode (16).

14. The method (100) according to claim 13, wherein the step (112) of attaching the parallel bars (40) to the first electrode (14) and/or to the second electrode (16) comprises extruding, gluing and/or 3D printing the separator material onto the first electrode (14) and/or to the second electrode (16) to form the parallel bars (40), the parallel bars (40) being attached to the first electrode (14) and/or to the second electrode (16) by adhesion of the separator material to the first electrode (14) and/or to the second electrode (16).
